# EUROPEAN PATENT APPLICATION

(11) **EP 4 730 626 A1**
(43) Date of publication of application: **22.04.2026**
(21) Application number: 24823255.5
(22) Date of filing: 03.06.2024
(51) Int. Cl.: H02K 9/19, H02K 15/02

(54) **LAMINATED CORE AND METHOD FOR MANUFACTURING LAMINATED CORE**

(30) Priority: 14.06.2023 JP 2023098003
(71) Applicant: Mitsui High-Tec, Inc., Kitakyushu-shi, Fukuoka 807-8588 (JP)
(72) Inventor: HATTORI, Sho, Kitakyushu-shi, Fukuoka 807-8588 (JP)
(74) Representative: Hoffmann Eitle
(86) International application number: PCT/JP2024/020193
(87) International publication number: WO 2024/257635

(57) **Abstract**

A laminated iron core (10) includes a laminated body (20) composed of a plurality of laminated iron core pieces (40). The laminated body (20) includes a flow path (26) through which a refrigerant passes. A boundary (44) between mutually adjacent iron core pieces (40) is sealed with a seal portion (40a) that is a part of an iron core piece (40) that contacts the boundary (44) in at least a part of an interior of the flow path (26).

## Description

### Field

A disclosed embodiment relates to a laminated iron core and a manufacturing method for a laminated iron core.

### Background

A motor has been known in which a flow path for passing a refrigerant therethrough is formed inside a laminated body that constitutes a rotor, for example. Such a flow path enables a magnet located inside the rotor to cool, so that it is possible to reduce irreversible demagnetization due to a high temperature at the time of operating the motor and the like.

### Citation List

### Patent Literature

Patent Literature 1: Japanese Patent Application Publication No. 2018-186604

### Summary

### Technical Problem

On the other hand, in a conventional technique, a refrigerant flowing through a flow path inside a laminated body may be leaked from a boundary between iron core pieces adjacent in a lamination direction. Thus, an amount of a refrigerant that contributes to cooling is reduced, so that a cooling performance of a rotor is degraded, and hence, a performance of a motor may be degraded.

An aspect of an embodiment is provided in view of the above, and aims to provide a laminated iron core that can reduce leaking of a refrigerant from a flow path in a laminated body and a manufacturing method for such a laminated iron core.

### Solution to Problem

A laminated iron core according to an aspect of an embodiment includes a laminated body composed of a plurality of laminated iron core pieces. The laminated body includes a flow path through which a refrigerant passes. A boundary between mutually adjacent iron core pieces is sealed with a seal portion that is a part of the iron core piece that contacts the boundary in at least a part of an interior of the flow path.

Furthermore, a manufacturing method for a laminated iron core according to an aspect of an embodiment includes a step of forming a hole portion, a step of forming a seal portion, a step of forming an iron core piece, and a step of forming a laminated body. The step of forming a hole portion is to punch out a belt-like metal plate to form a hole portion that is to be a part of a flow path through which a refrigerant passes. The step of forming a seal portion is to deform a peripheral part of the hole portion to form a seal portion. The step of forming an iron core piece is to punch out the metal plate to form an iron core piece. The step of forming a laminated body is to laminate a plurality of the iron core pieces to form a laminated body. The step of forming a laminated body is to seal a boundary between the mutually adjacent iron core pieces with the seal portion in at least a part of an interior of the flow path.

### Advantageous Effects of Invention

According to an aspect of an embodiment, it is possible to reduce leaking of a refrigerant from a flow path in a laminated body. Note that an effect as described herein is not necessarily limited, and may be any of effects as described in the present disclosure.

### Brief Description of Drawings

FIG. 1 is a plan view that illustrates an example of a rotor according to an embodiment.
FIG. 2 is a cross-sectional arrow view taken along a line A-A as illustrated in FIG. 1.
FIG. 3 is a schematic diagram that illustrates an example of a manufacturing apparatus for a laminated iron core according to an embodiment.
FIG. 4 is a flowchart that illustrates an example of a procedure for individual manufacturing processes to be executed by a manufacturing apparatus for a laminated iron core according to an embodiment.
FIG. 5 is an enlarged cross-sectional view that illustrates an example of a configuration of a laminated body according to an embodiment.
FIG. 6A is an enlarged cross-sectional view that illustrates an example of another configuration of a seal portion according to an embodiment.
FIG. 6B is a diagram for explaining an example of arrangement of a seal portion according to an embodiment.
FIG. 6C is a diagram for explaining another example of arrangement of a seal portion according to an embodiment.
FIG. 6D is a diagram for explaining another example of arrangement of a seal portion according to an embodiment.
FIG. 6E is a diagram for explaining another example of arrangement of a seal portion according to an embodiment.
FIG. 6F is a diagram for explaining another example of arrangement of a seal portion according to an embodiment.
FIG. 6G is a diagram for explaining another example of arrangement of a seal portion according to an embodiment.
FIG. 6H is a diagram for explaining another example of arrangement of a seal portion according to an embodiment.
FIG. 6I is a diagram for explaining another example of arrangement of a seal portion according to an embodiment.
FIG. 6J is a diagram for explaining another example of arrangement of a seal portion according to an embodiment.
FIG. 7A is an enlarged cross-sectional view that illustrates another example of a configuration of a laminated body according to an embodiment.
FIG. 7B is an enlarged cross-sectional view that illustrates another example of a configuration of a laminated body according to an embodiment.
FIG. 8 is a perspective view that illustrates an example of a configuration of a laminated iron core according to another embodiment.
FIG. 9 is a cross-sectional arrow view taken along a line B-B as illustrated in FIG. 8.

### Description of Embodiments

Hereinafter, a laminated iron core and a manufacturing method for a laminated iron core disclosed in the present application will be explained with reference to the accompanying drawings. Note that the present disclosure is not limited by an embodiment as described below.

Furthermore, it should be noted that the drawings are schematic, and a dimensional relationship between respective elements, a ratio of respective elements, and the like may differ from actual ones. Moreover, portions having different dimensional relationships and/or ratios may be included between the drawings.

### <Overall Configuration of Rotor>

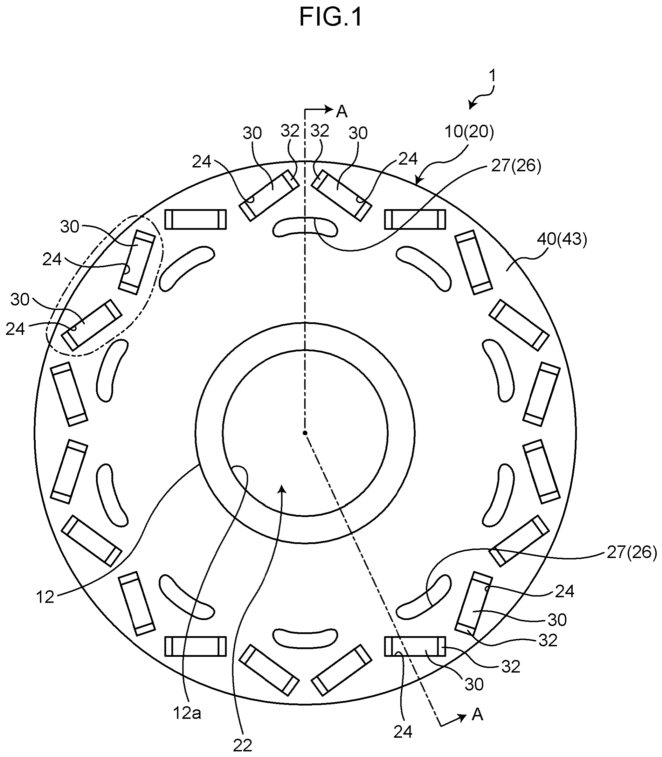

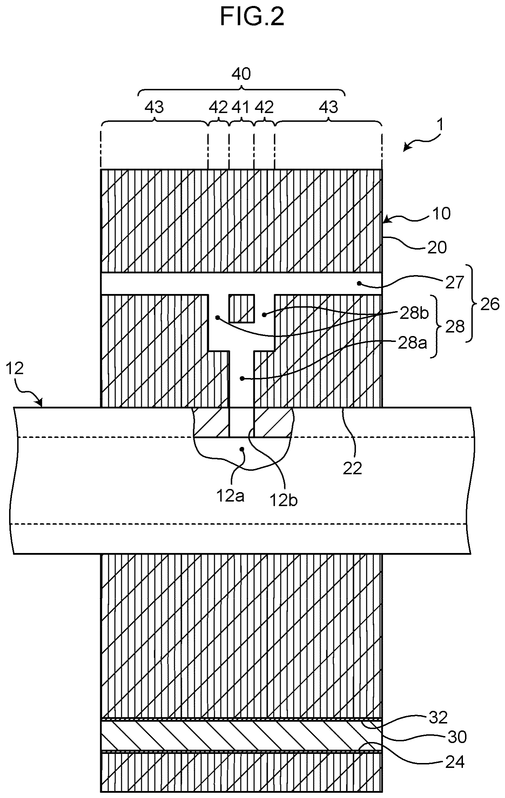

First, an overall configuration of a rotor 1 that uses a laminated iron core 10 according to an embodiment will be explained with reference to FIG. 1 and FIG. 2. FIG. 1 is a plan view that illustrates an example of a rotor 1 according to an embodiment, and FIG. 2 is a cross-sectional arrow view taken along a line A-A as illustrated in FIG. 1.

As illustrated in FIG. 1 and FIG. 2, the rotor 1 according to an embodiment includes a laminated iron core 10 and a rotor shaft 12.

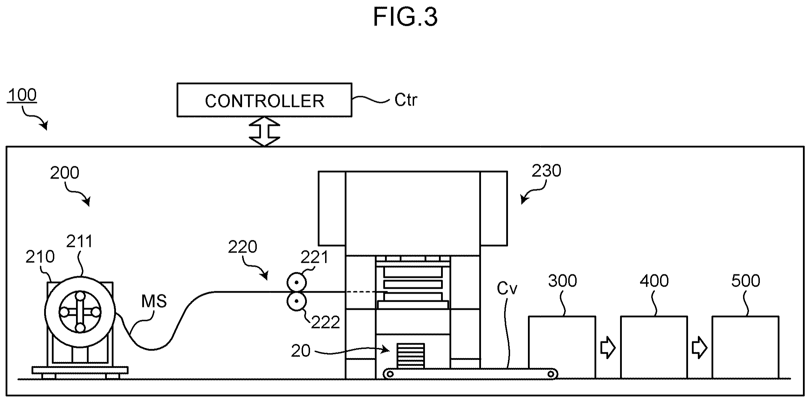

Furthermore, the laminated iron core 10 includes a laminated body 20 and a plurality of permanent magnets 30. As illustrated in FIG. 2, the laminated body 20 is composed of a plurality of laminated iron core pieces 40. An iron core piece 40 is a plate-like body that is provided by punching out a belt-like electrical steel sheet MS (see FIG. 3) into a predetermined shape.

As illustrated in FIG. 1, the laminated body 20 includes a center hole 22 and a plurality of insertion holes 24. The center hole 22 is located at a central portion in a plan view, and penetrates the laminated body 20 in an axial direction. The plurality of insertion holes 24 are located at an interval(s) in a circumferential direction and penetrates the laminated body 20 in an axial direction.

Note that hereinafter, an explanation will be provided while a radial direction, an axial direction, and a circumferential direction of the laminated iron core 10 are defined. Herein, a "radial direction" is a direction that is orthogonal to an axis of rotation of the rotor 1 that uses the laminated iron core 10, an "axial direction" is a direction that is coincident with an axial direction of an axis of rotation of the rotor 1, and a "circumferential direction" is a direction that is coincident with a direction of rotation of the rotor 1.

As illustrated in FIG. 2, for example, the plurality of iron core pieces 40 that constitutes the laminated body 20 include a plurality of first iron core pieces 41, a plurality of second iron core pieces 42, and a plurality of third iron core pieces 43.

The plurality of first iron core pieces 41 is located at a central portion of the laminated body 20 in an axial direction. The plurality of second iron core pieces 42 individually interpose the plurality of first iron core pieces 41 from both sides of the laminated body 20 in an axial direction. The plurality of third iron core pieces 43 individually interpose the second iron core pieces 42 from both sides of the laminated body 20 in an axial direction.

In the laminated iron core 10 according to an embodiment, mutually adjacent iron core pieces 40 may be fastened together by a variety of publicly-known methods. For example, the mutually adjacent iron core pieces 40 may be joined to one another by using a crimping part, an adhesive, or a resin material, or may be joined to one another by welding.

Alternatively, a temporary crimping may be provided on the iron core pieces 40 so as to fasten the plurality of iron core pieces 40 through such a temporary crimping and thus obtains the laminated body 20, and thereafter, such a temporary crimping may be removed from the laminated body 20 so as to obtain the laminated body 20. Such a "temporary crimping" means a crimping that is used so as to integrate the plurality of iron core pieces 40 temporarily and that is removed in a process of manufacturing a product (the laminated iron core 10 or a rotor).

The plurality of permanent magnets 30 are inserted in the plurality of insertion holes 24, respectively, and are fixed on the laminated body 20 through a filler 32. Note that a thermosetting epoxy resin, etc., are preferable for the filler 32, for example.

As illustrated in FIG. 1, in the laminated body 20 according to an embodiment, a plurality of pairs (ten pairs in FIG. 1) of mutually adjacent insertion holes 24 in a circumferential direction are formed. A pair of insertion holes 24 each has an elongated cross-sectional shape, and their portions that are closely adjacent to each other are located on an inner circumferential side. A permanent magnet 30 has a cross-sectional shape that is a rectangular shape that is longer in a longitudinal direction of a cross section of an insertion hole 24.

As illustrated in FIG. 2, the rotor shaft 12 is inserted through the center hole 22 of the laminated iron core 10.

Furthermore, a cooling flow path for passing a refrigerant (oil, etc., for example) to cool a permanent magnet 30 therethrough is provided inside the laminated iron core 10. Such a cooling flow path includes a flow path 12a that is located inside the rotor shaft 12 and a flow path 26 that is located inside the laminated body 20 and that is connected to the flow path 12a.

Furthermore, the flow path 26 includes an axial direction flow path 27 and a radial direction flow path 28. The axial direction flow path 27 extends along an axial direction (a horizontal direction in FIG. 2) of the laminated body 20. The radial direction flow path 28 connects the axial direction flow path 27 to the center hole 22.

The axial direction flow path 27 is formed in all of the plurality of first iron core pieces 41, second iron core pieces 42, and third iron core pieces 43 that constitute the laminated body 20, and penetrates the laminated body 20 in an axial direction.

The radial direction flow path 28 is formed in the first iron core pieces 41 and the second iron core pieces 42 that are located at a central portion in an axial direction, among the plurality of first iron core pieces 41, second iron core pieces 42, and third iron core pieces 43 that constitute the laminated body 20. The radial direction flow path 28 includes a slit 28a and a through-hole 28b.

The slit 28a is connected to the center hole 22 and extends along a radial direction. Furthermore, the slit 28a is connected to the flow path 12a via a communication hole 12b that penetrates a peripheral wall of the rotor shaft 12. The through-hole 28b branches into two from an outer peripheral portion of the slit 28a, and extends outward in a radial direction so as to be connected to the axial direction flow path 27.

### <Manufacturing Apparatus>

Next, a manufacturing apparatus 100 for a laminated iron core 10 according to an embodiment will be explained with reference to FIG. 3. FIG. 3 is a schematic diagram that illustrates an example of a manufacturing apparatus 100 for a laminated iron core 10 according to an embodiment. The manufacturing apparatus 100 according to an embodiment is configured to manufacture a laminated body 20 of iron core pieces 40 (see FIG. 2) from a belt-like electrical steel sheet MS and to manufacture a laminated iron core 10 (see FIG. 2) from such a laminated body 20. Such an electrical steel sheet MS is an example of a metal plate.

As illustrated in FIG. 3, the manufacturing apparatus 100 includes, for example, a punching device 200, a magnet insertion device 300, a preheating device 400, a resin injection device 500, and a controller Ctr (a control unit).

The punching device 200 includes an uncoiler 210, a feeding device 220, and a press processing device 230. The uncoiler 210 is configured to hold a coil material 211 rotatably. The coil material 211 is provided by winding an electrical steel sheet MS in a coil form (in a spiral form)

The feeding device 220 includes a pair of rollers 221, 222 that interposes an electrical steel sheet MS from above and below. The pair of rollers 221, 222 is configured to rotate and stop based on an instruction signal from the controller Ctr and to feed an electrical steel sheet MS toward the press processing device 230 intermittently and sequentially. That is, the pair of rollers 221, 222 has a function as transferring means for transferring an electrical steel sheet MS.

The press processing device 230 is configured to operate based on an instruction signal from the controller Ctr. The press processing device 230 has, for example, a function of applying press processing to an electrical steel sheet MS that is intermittently fed by the feeding device 220, sequentially, so as to form iron core pieces 40 (see FIG. 2), and a function of laminating the iron core pieces 40 that have been obtained through such press processing, sequentially, so as to manufacture a laminated body 20. Press processing to be executed by the press processing device 230 includes, for example, punching processing, half blanking processing, etc.

The magnet insertion device 300 operates based on an instruction from the controller Ctr, and has a function of inserting a permanent magnet 30 (see FIG. 1) in an insertion hole 24 (see FIG. 1) of a laminated body 20 that has been transferred from the punching device 200 by a conveyer Cv, etc.

The preheating device 400 operates based on an instruction from the controller Ctr, and has a function of heating a laminated body 20 that has been transferred from the magnet insertion device 300.

The resin injection device 500 operates based on an instruction from the controller Ctr, and has a function of injecting a filler 32 (see FIG. 1) in an insertion hole 24 of a laminated body 20 that has been transferred from the preheating device 400.

The controller Ctr is configured to generate an instruction signal for operating each device in the manufacturing apparatus 100 based on a program that is recorded in a recording medium (not illustrated), an operation input from an operator, etc., for example. The controller Ctr is configured to transmit such an instruction signal to each device in the manufacturing apparatus 100.

### <Manufacturing Steps>

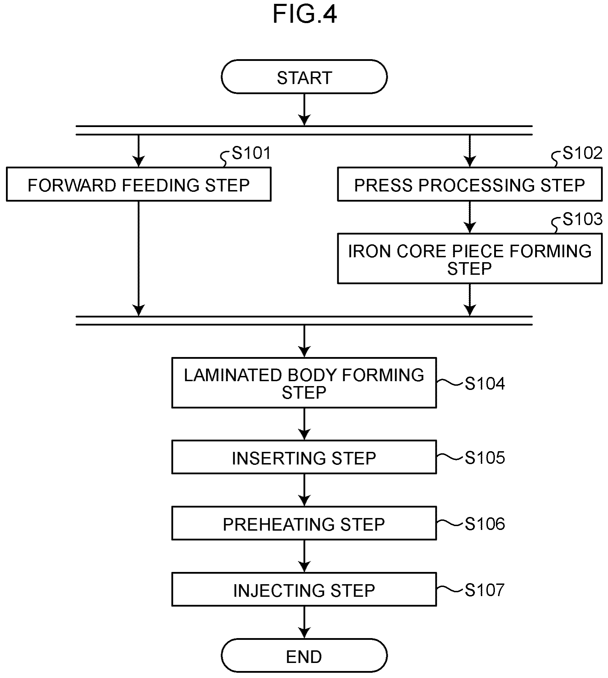

Next, manufacturing steps for a laminated iron core 10 according to an embodiment will be explained with reference to FIG. 4. FIG. 4 is a flowchart that illustrates an example of a procedure for individual manufacturing steps to be executed by a manufacturing apparatus 100 for a laminated iron core 10 according to an embodiment.

As illustrated in FIG. 4, a controller Ctr (see FIG. 3) first controls a feeding device 220 (see FIG. 3), etc., so as to feed forward an electrical steel sheet MS by a predetermined pitch in a forward feeding direction in a press processing device 230 (see FIG. 3) (step S101).

Furthermore, in parallel with such a step at step S101, a press processing step (step S102) and an iron core piece forming step (step S103) are executed in this order.

In a press processing process (step S102), the controller Ctr controls the press processing device 230 so as to lower an upper mold and thereby interpose an electrical steel sheet MS between such an upper mold and a lower mold, and to apply press processing to such an electrical steel sheet MS.

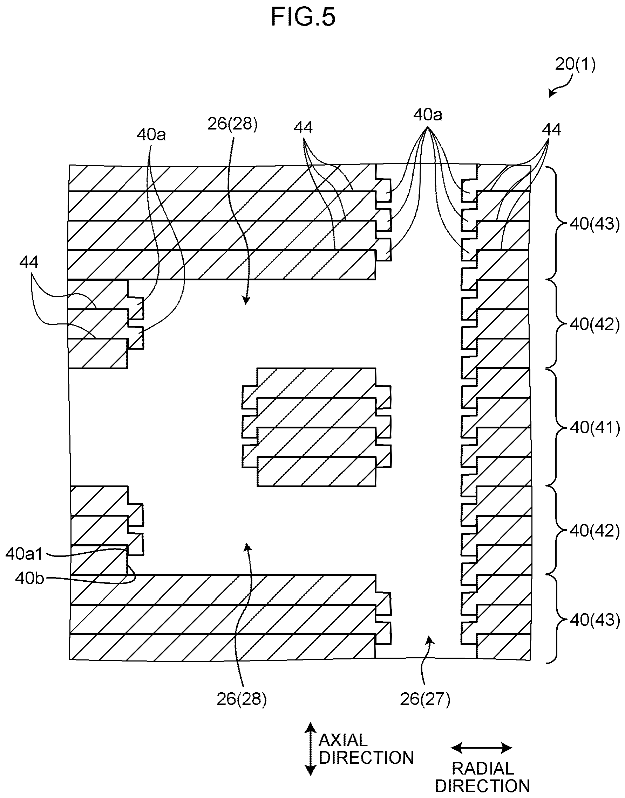

In such a press processing step, for example, the controller Ctr punches out an electrical steel sheet MS so as to form a hole portion that is to be a part of a flow path 26 (see FIG. 2) through which a refrigerant passes. Furthermore, in such a press processing step, for example, the controller Ctr applies half blanking processing to at least a part of a peripheral part of such a hole portion so as to form a seal portion 40a (see FIG. 5).

In an iron core piece forming step (step S103), the controller Ctr controls the press processing device 130 so as to lower an upper mold and thereby interpose an electrical steel sheet MS between such an upper mold and a lower mold, and to punch out such an electrical steel sheet MS and thereby form an iron core piece 40 (see FIG. 2).

Then, the controller Ctr controls the press processing device 130 so as to laminate a plurality of iron core pieces 40 and thereby form a laminated body 20 (see FIG. 2) (step S104). Note that in such a laminated body forming step, iron core pieces 40 adjacent in a lamination direction may be fastened together by a crimping, an adhesive, etc.

Then, the controller Ctr controls a magnet insertion device 300 so as to insert a permanent magnet 30 (see FIG. 2) in an insertion hole 24 (see FIG. 2) of a laminated body 20 (step S105).

Then, the controller Ctr controls a preheating device 400 so as to preheat a laminated body 20 in which a permanent magnet 30 is inserted (step S106). The preheating device 400 uses, for example, a heated gas or a heater so as to heat a laminated body 20 to a temperature appropriate for filling of a filler 32 (see FIG. 2).

Then, the controller Ctr controls a resin injection device 500 so as to inject a filler 32 in an insertion hole 24 in which a permanent magnet 30 is inserted, in a preheated laminated body 20 (step S107). Thus, a series of the manufacturing steps is completed.

### <Configuration of Flow Path>

Next, a detailed configuration of a flow path 26 that is provided in a laminated body 20 according to an embodiment will be explained with reference to FIG. 5 to FIG. 7B. FIG. 5 is an enlarged cross-sectional view that illustrates an example of a configuration of a laminated body 20 according to an embodiment.

As illustrated in FIG. 5, in a laminated body 20 according to an embodiment, a boundary 44 located between mutually adjacent iron core pieces 40 is sealed with a seal portion 40a that is a part of an iron core piece 40 that contacts such a boundary 44 inside a flow path 26.

For example, in an example of FIG. 5, a boundary 44 between mutually adjacent first iron core pieces 41 is sealed with a seal portion 40a that is a part of a first iron core piece 41 inside the flow path 26. Furthermore, a boundary 44 between mutually adjacent second iron core pieces 42 is sealed with a seal portion 40a that is a part of a second iron core piece 42 inside the flow path 26.

Furthermore, a boundary 44 between mutually adjacent third iron core pieces 43 is sealed with a seal portion 40a that is a part of a third iron core piece 43 inside the flow path 26. Furthermore, a boundary 44 between a first iron core piece 41 and a second iron core piece 42 that are adjacent to each other is sealed with a seal portion 40a that is a part of such a first iron core piece 41 or second iron core piece 42 inside the flow path 26.

Furthermore, a boundary 44 between a second iron core piece 42 and a third iron core piece 43 that are adjacent to each other is sealed with a seal portion 40a that is a part of such a second iron core piece 42 or third iron core piece 43 in an axial direction flow path 27.

Thus, it is possible to reduce leaking of a refrigerant passing through the flow path 26 in the laminated body 20 from a boundary 44 between mutually adjacent iron core pieces 40. Therefore, according to an embodiment, it is possible to favorably maintain a cooling performance for a permanent magnet 30, so that it is possible to favorably maintain a performance of a motor that uses a rotor 1.

Furthermore, in an embodiment, it is possible to favorably maintain a cooling performance for a permanent magnet 30, so that a more powerful mechanism (such as an oil pump) for supplying a refrigerant does not need to be provided thereto, thereby contributing to downsizing an entire motor.

Furthermore, in an embodiment, as illustrated in FIG. 5, a seal portion 40a may be formed by applying half blanking processing (pushing down processing) to a peripheral part of a hole portion constituting the flow path 26 in an iron core piece 40, in a press processing device 230 (see FIG. 3).

Thus, it possible to form a seal portion 40a in a part of a manufacturing step for an iron core piece 40. Therefore, according to an embodiment, it is possible to reduce leaking of a refrigerant easily as compared with a case where a boundary 44 between mutually adjacent iron core pieces 40 is alternatively sealed with a sealing material, etc.

Note that, in the present disclosure, "half blanking processing" refers to performing press processing with a thickness less than that of an electrical steel sheet MS where complete punching thereof is not performed in such processing.

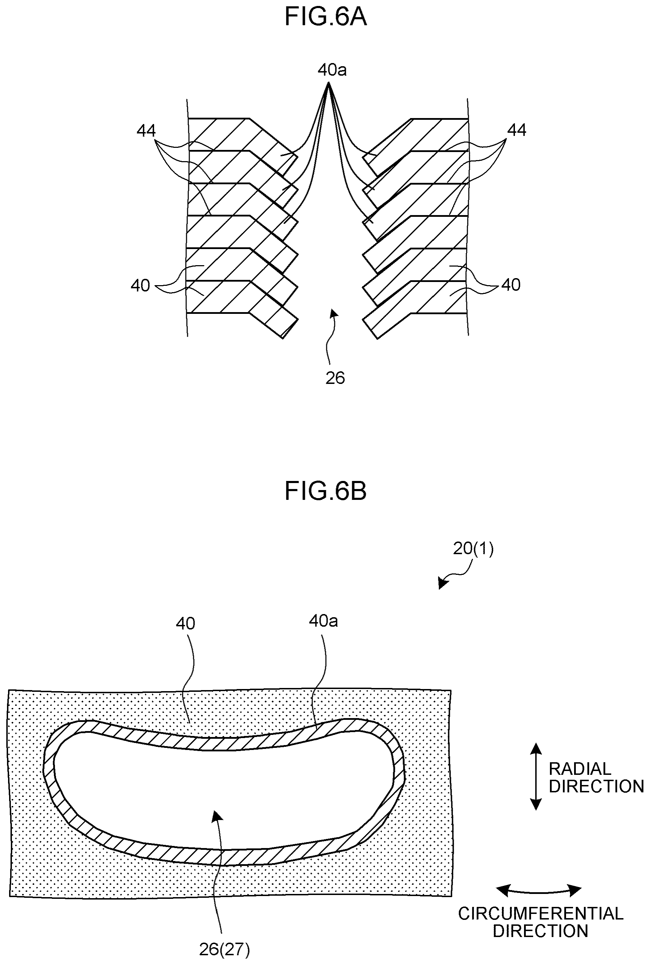

Furthermore, the present disclosure is not limited to a case where a seal portion 40a is formed by applying half blanking processing to a peripheral part of such a hole portion. As illustrated in FIG. 6A, for example, a seal portion 40a may be formed by applying bending processing to a peripheral part of a hole portion constituting the flow path 26 in an iron core piece 40. FIG. 6A is an enlarged cross-sectional view that illustrates an example of another configuration of a seal portion 40a according to an embodiment.

Thus, such a seal portion 40a also seals a boundary 44 between mutually adjacent iron core pieces 40, so that it is possible to reduce leaking of a refrigerant passing through the flow path 26 from such a boundary 44.

Furthermore, in an embodiment, a seal portion 40a may be provided only in a part of the flow path 26. Thus, residual stress of the laminated body 20 that is caused by processing for providing a seal portion 40a is less than that in a case where it is provided in an entire flow path 26. Therefore, according to an embodiment, it is possible to reduce deformation of the laminated body 20.

Furthermore, in an embodiment, a seal portion 40a may function as a crimping that fastens mutually adjacent iron core pieces 40 together. Thus, a boundary 44 is solidly sealed by a seal portion 40a, and a gap between adjacent iron core pieces 40 is reduced due to such a seal portion 40a that also functions as a crimping, so that it is possible to increase an occupancy of the laminated body 20.

Therefore, according to an embodiment, it is possible to reduce leaking of a refrigerant passing through the flow path 26 from a boundary 44 and a gap between adjacent iron core pieces 40.

Note that, as illustrated in FIG. 5, in a case where a seal portion 40a functions as a crimping, both of a face 40a1 of a seal portion 40a that is opposite to a face facing the flow path 26 and a side face 40b of an iron core piece 40 that contacts such a face are preferably provided along an axial direction (that is, substantially orthogonal to a radial direction).

Thus, even when force is applied in a direction that separates adjacent iron core pieces 40 from each other, sufficient friction force acts between a face 40a1 and a side face 40b that contact each other, so that it is possible to reduce separation of such adjacent iron core pieces 40 from each other.

Furthermore, in an embodiment, a seal portion 40a functions as a crimping, so that it is possible to eliminate labor to fasten mutually adjacent iron core pieces 40 together by another crimping, an adhesive, etc., in a step of forming a laminated body 20 (step S104 in FIG. 4). Thus, it is possible to simplify a manufacturing step for a laminated iron core 10.

FIG. 6B is a diagram for explaining an example of arrangement of a seal portion 40a according to an embodiment. Note that FIG. 6B to FIG. 6E illustrate arrangement of a seal portion 40a in a case where an axial direction flow path 27 of a flow path 26 is viewed from an axial direction.

As illustrated in FIG. 6B, a seal portion 40a according to an embodiment may be located on a radial direction side and a circumferential direction side of the flow path 26. That is, a seal portion 40a according to an embodiment may be located on an entire circumference of the flow path 26 when viewed from an axial direction.

Thus, a boundary 44 is solidly sealed by a seal portion 40a, so that it is possible to further reduce leaking of a refrigerant passing through the flow path 26 from such a boundary 44.

Furthermore, in an embodiment, as illustrated in FIG. 6B, a seal portion 40a is arranged such that its thickness is even along an inner wall of the flow path 26, so that it is possible to reduce unevenness of a sealing performance of such a seal portion 40a.

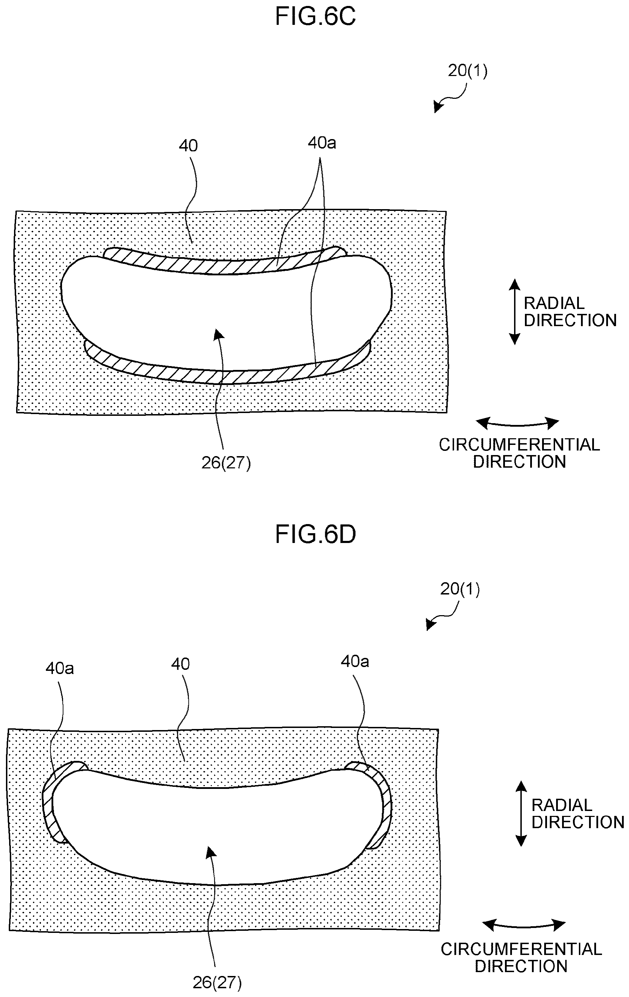

Note that arrangement of a seal portion 40a according to an embodiment is not limited to an example of FIG. 6B. FIG. 6C to FIG. 6E are diagrams for explaining other examples of arrangement of a seal portion 40a according to an embodiment.

As illustrated in FIG. 6C, a seal portion 40a according to an embodiment may be located only on a radial direction side of a flow path 26. Thus, it is possible to reduce leaking of a refrigerant on a radial direction side (particularly, outside in a radial direction) of the flow path 26, so that it is possible to reduce leaking of a refrigerant to a gap with a stator provided outside a rotor 1 in a radial direction.

Therefore, according to an embodiment, it is possible to reduce increase of a drag loss of the rotor 1, so that it is possible to favorably maintain a performance of a motor that uses the rotor 1.

Furthermore, a seal portion 40a according to an embodiment may be located only on a side where the rotor 1 faces a stator (in such a case, in an outer radial direction) among both radial directions in the flow path 26. Thus, it is possible to reduce leaking of a refrigerant to a gap with a stator provided outside the rotor 1 in a radial direction.

Therefore, according to an embodiment, it is possible to reduce increase of a drag loss of the rotor 1, so that it is possible to favorably maintain a performance of a motor that uses the rotor 1.

Furthermore, as illustrated in FIG. 6D, a seal portion 40a according to an embodiment may be located only on a circumferential direction side of a flow path 26. In such a case, it is also possible to reduce leaking of a refrigerant passing through the flow path 26 from a boundary 44.

Furthermore, in an embodiment, as illustrated in examples of FIG. 6C and FIG. 6D, a seal portion 40a is provided only in a part of the flow path 26, so that residual stress of a laminated body 20 that is caused by processing for providing such a seal portion 40a is less than that in a case where it is provided on an entire circumference. Therefore, according to an embodiment, it is possible to reduce deformation of a laminated body 20.

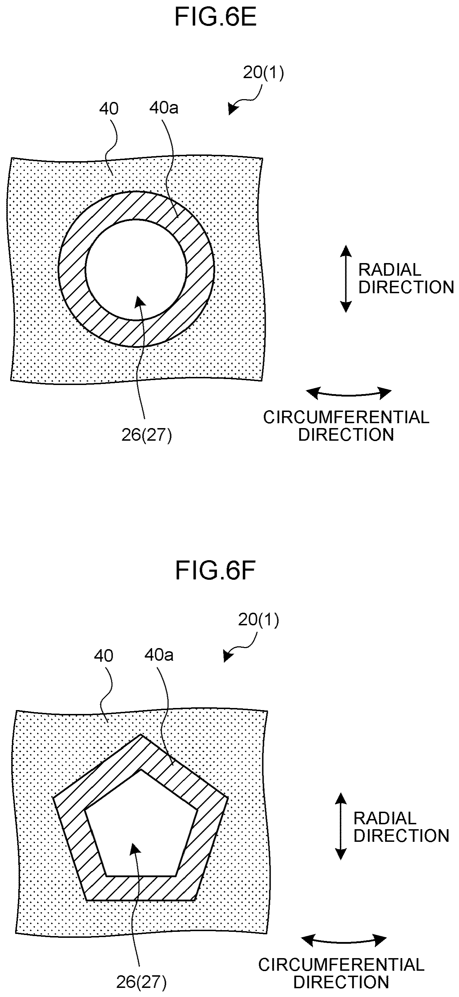

Furthermore, in an embodiment, as illustrated in FIG. 6E, a seal portion 40a may be arranged on an entire circumference of a flow path 26 with a substantially perfect-circular shape when viewed from an axial direction such that its thickness is even along an inner wall of the flow path 26. In other words, such an example of FIG. 6E is a configuration in which the flow path 26 is formed in a central portion of a so-called round and flat crimping.

Thus, providing a flow path 26 and a seal portion 40a with a substantially perfect-circular shape in a plan view can decrease an exclusive area of such a flow path 26 and seal portion 40a of a laminated body 20. Therefore, according to an embodiment, it is possible to increase a degree of freedom in design of a laminated iron core 10.

Furthermore, in an embodiment, as illustrated in FIG. 6F, a seal portion 40a may be arranged on an entire circumference of a flow path 26 with a polygonal shape (a pentagonal shape, for example) when viewed from an axial direction such that its thickness is even along an inner wall of such a flow path 26.

Thus, it is possible to increase a surface area of a flow path 26 by providing such a flow path 26 and a seal portion 40a with a polygonal shape in a plan view. Therefore, according to an embodiment, it is possible to improve a cooling performance of a permanent magnet 30 (see FIG. 1), so that it is possible to improve a performance of a motor that uses a rotor 1 (see FIG. 1).

Note that, although an example where the flow path 26 and the seal portion 40a have a pentagonal shape in a plan view is illustrated in an example of FIG. 6F, the present disclosure is not limited to such an example, and such a flow path 26 and a seal portion 40a may have a triangular shape, a quadrilateral shape, or a hexagonal or higher polygonal shape.

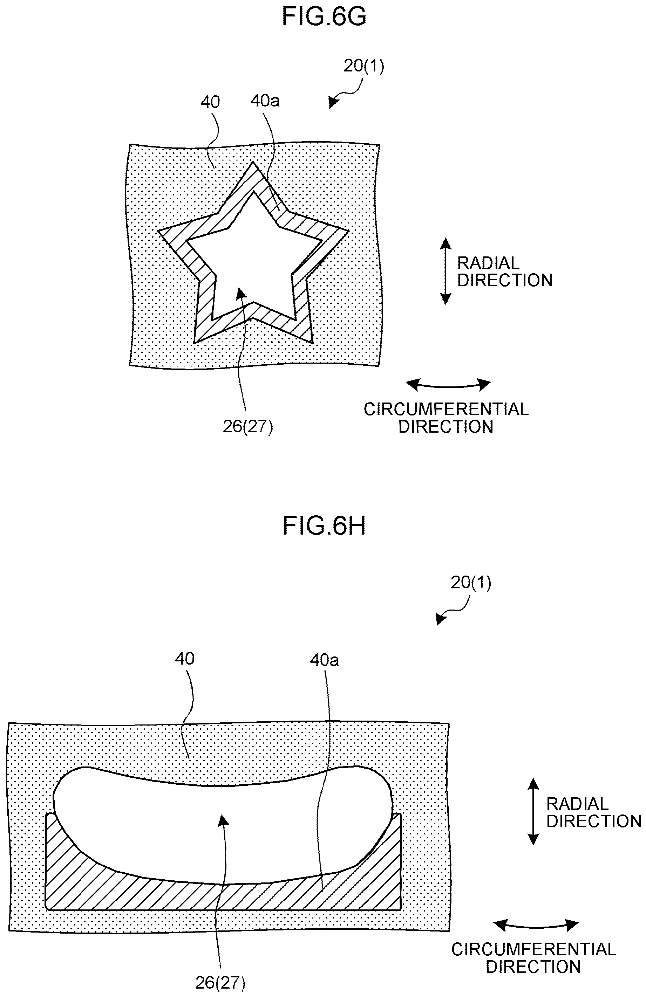

Furthermore, in an embodiment, as illustrated in FIG. 6G, a seal portion 40a may be arranged on an entire circumference of a flow path 26 with a complex shape (a star shape, for example) when viewed from an axial direction such that its thickness is even along an inner wall of such a flow path 26.

Thus, it is possible to increase a surface area of a flow path 26 by providing such a flow path 26 and a seal portion 40a with a complex shape in a plan view. Therefore, according to an embodiment, it is possible to improve a cooling performance of a permanent magnet 30 (see FIG. 1), so that it is possible to improve a performance of a motor that uses a rotor 1 (see FIG. 1).

Note that, although an example where the flow path 26 and the seal portion 40a have a star shape in a plan view is illustrated in an example of FIG. 6G, the present disclosure is not limited to such an example, and such a flow path 26 and a seal portion 40a may have a complex shape other than a star shape.

Furthermore, a seal portion 40a according to an embodiment is not limited to a case where it is arranged such that its thickness is even along an inner wall of a flow path 26 as illustrated in FIG. 6A to FIG. 6G, and a shape of such a flow path 26 in a plan view and a shape of such a seal portion 40a in a plan view do not need to coincide with each other. For example, as illustrated in FIG. 6H, a shape of a flow path 26 in a plan view and a shape of a seal portion 40a in a plan view may be completely different from each other.

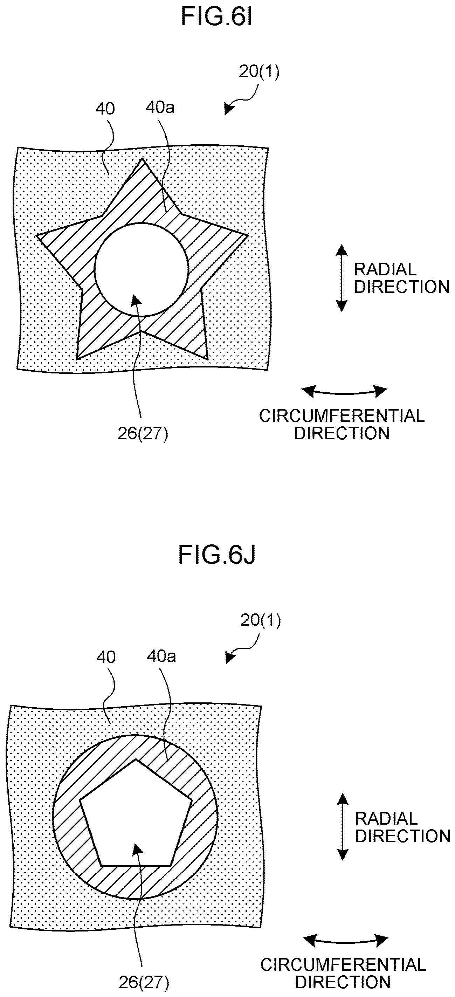

Furthermore, in the present disclosure, as illustrated in FIG. 6I, for example, in a plan view, a flow path 26 may have a substantially perfect-circular shape, whereas a seal portion 40a may have a complex shape (a star shape, for example). Furthermore, in the present disclosure, as illustrated in FIG. 6J, for example, in a plan view, a flow path 26 may have a polygonal shape (a pentagonal shape, for example), whereas a seal portion 40a may have a substantially perfect-circular shape.

Furthermore, in the present disclosure, for example, in a plan view, a flow path 26 may have a rectangular shape, whereas a seal portion 40a may have a circular or elliptical shape. Furthermore, in the present disclosure, for example, in a plan view, a flow path 26 may have a circular or elliptical shape, whereas a seal portion 40a may have a rectangular shape.

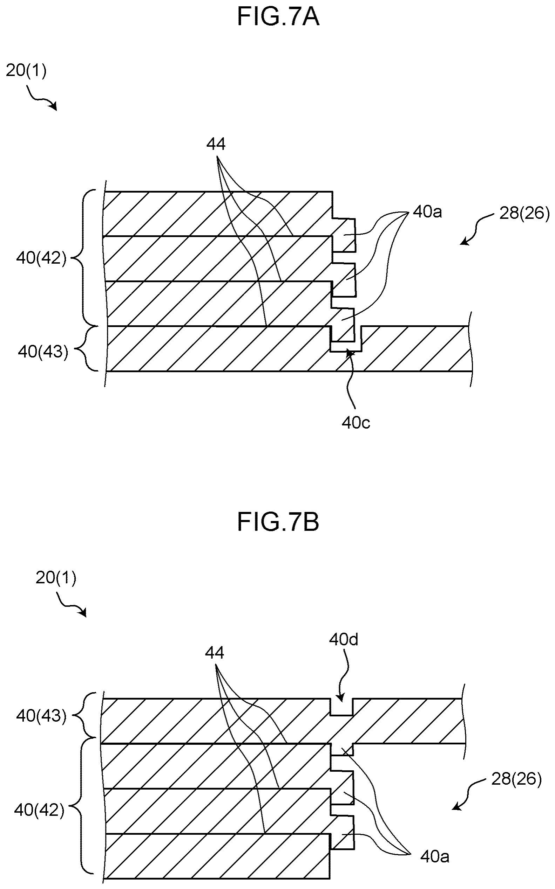

FIG. 7A is an enlarged cross-sectional view that illustrates another example of a configuration of a laminated body 20 according to an embodiment. As illustrated in FIG. 7A, as for a boundary 44 facing a radial direction flow path 28 and provided in such a manner that a third iron core piece 43 is located under a second iron core pieces 42, such a boundary 44 may also be sealed with a seal portion 40a formed on such a second iron core piece 42.

In such a case, a seal portion 40a of a second iron core piece 42 and a third iron core piece 43 thereunder would interfere with each other without change, and hence, a recessed portion 40c is preferably provided at a part of such a third iron core piece 43 that corresponds to such a seal portion 40a.

Thus, it is possible to reduce leaking of a refrigerant passing through a radial direction flow path 28 from a boundary 44 where a third iron core piece 43 is located under a second iron core pieces 42.

FIG. 7B is an enlarged cross-sectional view that illustrates another example of a configuration of a laminated body 20 according to an embodiment. As illustrated in FIG. 7B, as for a boundary 44 facing a radial direction flow path 28 and provided in such a manner that a second iron core pieces 42 is located under a third iron core piece 43, such a boundary 44 may also be sealed with a seal portion 40a formed on such a third iron core piece 43.

In such a case, a recessed portion 40d is formed by applying half blanking processing to a part of a third iron core piece 43 that corresponds to an edge portion of a second iron core piece 42, so that a seal portion 40a is preferably formed under such a recessed portion 40d.

Thus, it is possible to reduce leaking of a refrigerant passing through a radial direction flow path 28 from a boundary 44 where a second iron core pieces 42 is located under a third iron core piece 43.

### <Other Embodiments>

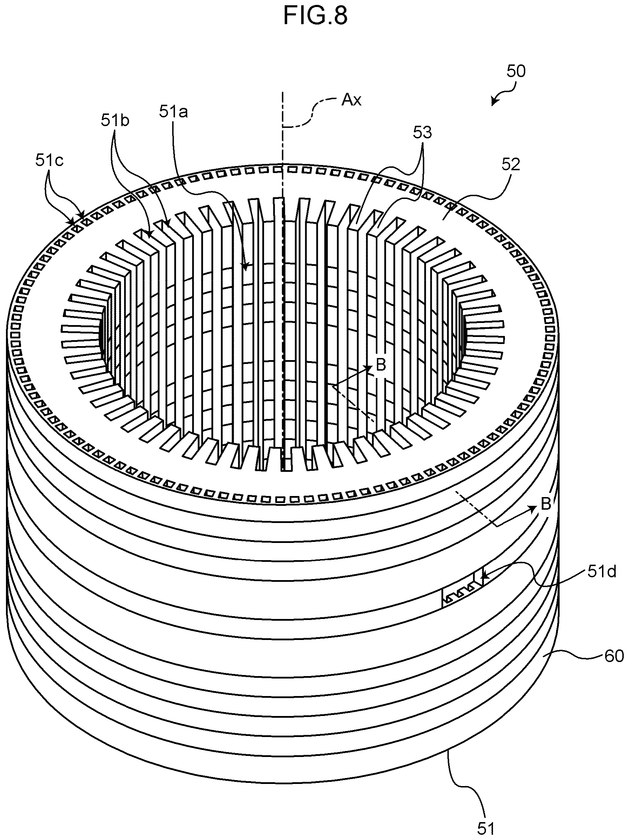

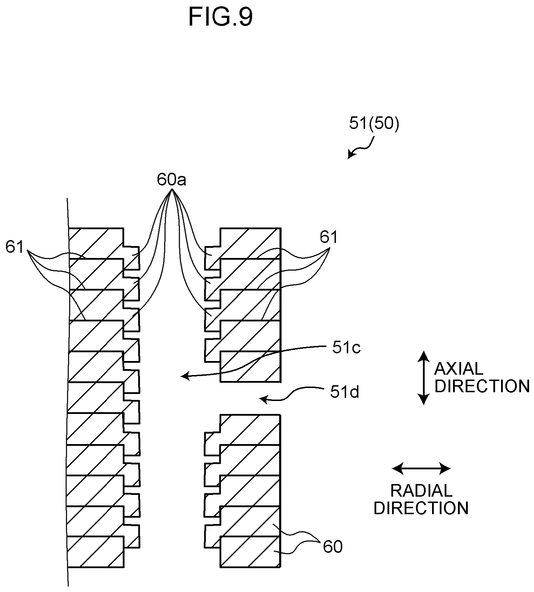

Next, a laminated iron core 50 according to another embodiment will be explained with reference to FIG. 8 and FIG. 9. FIG. 8 is a perspective view that illustrates an example of a configuration of a laminated iron core 50 according to another embodiment, and FIG. 9 is a cross-sectional arrow view taken along a line B-B as illustrated in FIG. 8.

The laminated iron core 50 according to another embodiment is, for example, a stator laminated core that is a part of a stator. Note that such a stator is provided by attaching a winding to the laminated iron core 50. A combination of such a stator and a rotor constitutes a motor.

The laminated iron core 50 includes a laminated body 51. The laminated body 51 is composed of a plurality of laminated iron core pieces 60. An iron core piece 60 is a plate-like body that is provided by punching out a belt-like electrical steel sheet MS (see FIG. 3) into a predetermined shape.

As illustrated in FIG. 8, the laminated body 51 according to another embodiment has a cylindrical shape. That is, a through-hole 51a (a center hole) that extends along a central axis Ax is provided in a central portion of the laminated body 51. It is possible to arrange a rotor in the through-hole 51a.

The laminated body 51 includes a yoke 52 and a plurality of teeth 53. The yoke 52 has a ring shape and extends so as to surround a central axis Ax. It is possible to set a width, an inner diameter, an outer diameter, and a thickness of the yoke 52 in a radial direction at various sizes individually depending on use and a performance of a motor.

Each of the teeth 53 extends from an inner periphery of the yoke 52 toward a central axis Ax side along a radial direction of the yoke 52. That is, each of the teeth 53 protrudes from an inner periphery of the yoke 52 toward a central axis Ax side.

Respective teeth 53 are arranged at substantially equal intervals in a circumferential direction of the yoke 52. A slot 51b that functions as a space for arranging a winding (not illustrated) therein is defined between adjacent teeth 53.

In the laminated iron core 50 according to another embodiment, mutually adjacent iron core pieces 60 may be fastened together by various publicly-known methods. For example, mutually adjacent iron core pieces 60 may be joined to each other by a crimping part, an adhesive, or a resin material, or may be joined to each other by welding.

Alternatively, the laminated body 51 may be obtained by providing a temporary crimping on the iron core pieces 60, fastening the plurality of iron core pieces 60 together through such a temporary crimping to obtain the laminated body 51, and subsequently, removing such a temporary crimping from such a laminated body 51. Such a "temporary crimping" means a crimping that is used for temporarily integrating the plurality of iron core pieces 60 and that is removed therefrom in a process of manufacturing a product (the laminated iron core 50 or a stator).

Herein, in another embodiment, a plurality of flow paths 51c for passing a refrigerant (oil, etc., for example) to cool a stator therethrough is provided in the laminated body 51. Such a flow path 51c penetrates an interior of the yoke 52 in an axial direction, for example. Furthermore, the plurality of flow paths 51c are located side-by-side along a circumferential direction of the yoke 52, for example.

Moreover, an opening 51d is formed so as to be connected to one or more flow paths 51c on a side part of the laminated body 51. Such an opening 51d functions as an inlet or an outlet for a refrigerant passing through the flow paths 51c, for example.

Then, in the laminated body 51 according to another embodiment, as illustrated in FIG. 9, a boundary 61 located between mutually adjacent iron core pieces 60 is sealed with a seal portion 60a that is a part of an iron core piece 60 that contacts such a boundary 61 inside a flow path 51c. FIG. 9 is a cross-sectional arrow view taken along a line B-B as illustrated in FIG. 8, and a diagram that illustrates an internal configuration of a flow path 51c.

Thus, it is possible to reduce leaking of a refrigerant passing through a flow path 51c in the laminated body 51 from a boundary 61 between mutually adjacent iron core pieces 60. Therefore, according to another embodiment, it is possible to reduce excessive rising of a temperature of a stator composed of the laminated iron core 50, so that it is possible to favorably maintain a performance of a motor that uses such a stator.

Furthermore, in another embodiment, as illustrated in FIG. 9, a seal portion 60a may be formed by applying half blanking processing to a peripheral part of a hole portion constituting a flow path 51c in an iron core piece 60, in a press processing device 230 (see FIG. 3).

Thus, it is possible to form a seal portion 60a in a part of a manufacturing step for an iron core piece 60. Therefore, according to another embodiment, it is possible to reduce leaking of a refrigerant easily as compared with a case where a boundary 61 between mutually adjacent iron core pieces 60 is alternatively sealed with a sealing material.

Furthermore, in another embodiment, a seal portion 60a may function as a crimping that fastens mutually adjacent iron core pieces 60 together. Thus, a boundary 61 is solidly sealed with a seal portion 60a, so that it is possible to further reduce leaking of a refrigerant passing through a flow path 51c from such a boundary 61.

Furthermore, in another embodiment, a seal portion 60a functions as a crimping, so that it is possible to eliminate labor to fasten mutually adjacent iron core pieces 60 together by another crimping, an adhesive, etc., in a step of forming a laminated body 51 (step S104 in FIG. 4). Thus, it is possible to simplify a manufacturing step for a laminated iron core 50.

Furthermore, a seal portion 60a according to another embodiment may be located on a radial direction side and a circumferential direction side of a flow path 51c. That is, a seal portion 60a according to another embodiment may be located on an entire circumference of a flow path 51c when viewed from an axial direction.

Thus, a boundary 61 is solidly sealed with a seal portion 60a, so that it is possible to further reduce leaking of a refrigerant passing through a flow path 51c from such a boundary 61.

Furthermore, a seal portion 60a according to another embodiment may be located only on a radial direction side of a flow path 51c. Thus, it is possible to reduce leaking of a refrigerant on a radial direction side (particularly, an inside in radial direction) of a flow path 51c, so that it is possible to reduce leaking of a refrigerant to a gap with a rotor provided inside a stator in a radial direction.

Therefore, according to another embodiment, it is possible to reduce increase of a drag loss of a rotor, so that it is possible to favorably maintain a performance of a motor that uses a stator.

Furthermore, a seal portion 60a according to another embodiment may be located only on a side where a stator faces a rotor (in such a case, in an inner radial direction) among both radial directions of a flow path 51c. Thus, it is possible to reduce leaking of a refrigerant to a gap with a rotor provided inside a stator in a radial direction.

Therefore, according to another embodiment, it is possible to reduce increase of a drag loss of a rotor, so that it is possible to favorably maintain a performance of a motor that uses a stator.

Furthermore, a seal portion 60a according to another embodiment may be located only on a circumferential direction side of a flow path 51c. In such a case, it is also possible to reduce leaking of a refrigerant passing through a flow path 51c from a boundary 61.

Although the individual embodiments of the present invention have been explained above, the present invention is not limited to the above-described embodiments, and various modifications can be made thereto without departing from the spirit thereof. For example, although an example where the seal portion 40a, 60a is provided in the flow path 26, 51c of the laminated iron core 10, 50 that is used for an inner rotor motor is illustrated in the individual embodiments as described above, the present disclosure is not limited to such an example.

For example, a seal portion of the present disclosure may be provided in a flow path in a laminated iron core used for an outer rotor motor. In such a case, it is also possible to reduce leaking of a refrigerant from a flow path in a laminated body constituting a stator or a rotor.

Additional effects and/or variations can readily be derived by a person(s) skilled in the art. Hence, a broader aspect of the present invention is not limited to specific details and representative embodiments as illustrated and described above. Therefore, various modifications can be made without departing from the spirit or scope of the general inventive concept that is defined by the appended claims and equivalents thereof.

Note that it is also possible for the present technique to have a configuration as provided below.
(1) A laminated iron core including a laminated body composed of a plurality of laminated iron core pieces, wherein
   the laminated body includes a flow path through which a refrigerant passes, and
   a boundary between the mutually adjacent iron core pieces is sealed with a seal portion that is a part of the iron core piece that contacts the boundary in at least a part of an interior of the flow path.
(2) The laminated iron core according to item (1), wherein
   the seal portion functions as a crimping that fastens the mutually adjacent iron core pieces together.
(3) The laminated iron core according to item (1) or (2), wherein
   the seal portion is located on a radial direction side of the flow path.
(4) The laminated iron core according to item (3), wherein
   the laminated body is a part of a rotor, and
   the seal portion is located on a side where the rotor faces a stator.
(5) The laminated iron core according to item (3), wherein
   the laminated body is a part of a stator, and
   the seal portion is located on a side where the stator faces a rotor.
(6) The laminated iron core according to any one of items (1) to (5), wherein
   the seal portion is located on a circumferential direction side of the flow path.
(7) A manufacturing method for a laminated iron core, including:
   a step of punching out a belt-like metal plate to form a hole portion that is to be a part of a flow path through which a refrigerant passes;
   a step of deforming a peripheral part of the hole portion to form a seal portion;
   a step of punching out the metal plate to form an iron core piece; and
   a step of laminating a plurality of the iron core pieces to form a laminated body, wherein
   the step of forming a laminated body is to seal a boundary between the mutually adjacent iron core pieces with the seal portion in at least a part of an interior of the flow path.
(8) The manufacturing method for a laminated iron core according to item (7), wherein
   the step of forming a seal portion is to push down a peripheral part of the hole portion to form the seal portion.
(9) The manufacturing method for a laminated iron core according to item (7), wherein
   the step of forming a seal portion is to bend a peripheral part of the hole portion to form the seal portion.

### Reference Signs List

- 10: Laminated iron core
- 20: Laminated body
- 26: Flow path
- 40: Iron core piece
- 40a: Seal portion
- 44: Boundary
- 50: Laminated iron core
- 51: Laminated body
- 51c: Flow path
- 60: Iron core piece
- 60a: Seal portion
- 61: Boundary
- MS: Electrical steel (an example of a metal plate)

## Claims

1. A laminated iron core comprising a laminated body composed of a plurality of laminated iron core pieces, wherein
the laminated body includes a flow path through which a refrigerant passes, and
a boundary between the mutually adjacent iron core pieces is sealed with a seal portion that is a part of the iron core piece that contacts the boundary in at least a part of an interior of the flow path.

2. The laminated iron core according to claim 1, wherein
the seal portion functions as a crimping that fastens the mutually adjacent iron core pieces together.

3. The laminated iron core according to claim 1 or 2, wherein
the seal portion is located on a radial direction side of the flow path.

4. The laminated iron core according to claim 3, wherein
the laminated body is a part of a rotor, and
the seal portion is located on a side where the rotor faces a stator.

5. The laminated iron core according to claim 3, wherein
the laminated body is a part of a stator, and
the seal portion is located on a side where the stator faces a rotor.

6. The laminated iron core according to claim 1 or 2, wherein
the seal portion is located on a circumferential direction side of the flow path.

7. A manufacturing method for a laminated iron core, comprising:
a step of punching out a belt-like metal plate to form a hole portion that is to be a part of a flow path through which a refrigerant passes;
a step of deforming a peripheral part of the hole portion to form a seal portion;
a step of punching out the metal plate to form an iron core piece; and
a step of laminating a plurality of the iron core pieces to form a laminated body, wherein
the step of forming a laminated body is to seal a boundary between the mutually adjacent iron core pieces with the seal portion in at least a part of an interior of the flow path.

8. The manufacturing method for a laminated iron core according to claim 7, wherein
the step of forming a seal portion is to push down a peripheral part of the hole portion to form the seal portion.

9. The manufacturing method for a laminated iron core according to claim 7, wherein
the step of forming a seal portion is to bend a peripheral part of the hole portion to form the seal portion.
